# EUROPEAN PATENT APPLICATION

(11) **EP 2 814 191 A1**
(43) Date of publication of application: **17.12.2014**
(21) Application number: 13747120.7
(22) Date of filing: 01.02.2013
(51) Int. Cl.: H04J 11/00, H04B 1/16

(54) **PORTABLE INFORMATION TERMINAL, DEMODULATION METHOD, AND CONTROL PROGRAM THEREOF**

(30) Priority: 08.02.2012 JP 2012025291
(71) Applicant: NEC Corporation, Tokyo 108-0014 (JP); NTT Docomo, Inc., Tokyo 100-6150 (JP)
(72) Inventor: OGORO, Kazuo, Tkyo 108-0014 (JP)
(74) Representative: Vossius & Partner
(86) International application number: PCT/JP2013/052960
(87) International publication number: WO 2013/118850

(57) **Abstract**

Provided is a portable information terminal, which has a function of receiving digital broadcasting. Information on a Doppler frequency is estimated based on a received wave, and a moving speed is estimated based on the estimated information on the Doppler frequency, thereby determining a parameter of an FFT window in accordance with the estimated moving speed.

## Description

### Technical Field

This invention relates to a portable information terminal having a digital broadcasting reception function, a demodulation method in the portable information terminal, and a control program therefor.

### Background Art

Nowadays, various portable information terminals such as a tablet terminal (multifunction portable terminal) and a smartphone (highly functional mobile phone) are put on the market. iPad (trademark) is known as a typical example of the tablet terminal (multifunction portable terminal), and iPhone (trademark) is known as a typical example of the smartphone (highly functional mobile phone).

Such various portable information terminals have a digital broadcasting reception function typified by One Seg function installed therein, and almost all models of newly released information terminals have One Seg function installed therein. Further, a new service called multimedia broadcasting starts in 2012 with use of a frequency band in which analog television broadcasting has ceased, and it is expected that the chance to utilize digital broadcasting further increases.

The portable information terminal is often used outdoors due to the characteristics thereof. For example, it is possible to watch digital broadcasting with use of the digital broadcasting reception function of the information terminal along movement, such as on the train, bus, or automobile, while walking, or the like. In such environments, the contents may not be watched on site but recorded to be played later.

As an example of such portable information terminals, in Patent Literature 1, there is disclosed a receiving apparatus configured to detect a moving speed of an electronic device that receives radio waves without using a detecting member for detecting the moving speed. The electronic device of Patent Literature 1 includes a speed estimating section for estimating the moving speed based on a plurality of detection values relating to the received radio waves. The speed estimating section acquires a variation frequency included in the plurality of detection values, estimates a Doppler frequency of the received radio waves based on the variation frequency, and estimates the travelling speed based on the Doppler frequency and on a signal frequency of the received radio waves.

### Prior Art Document

### Patent Document

Patent Document 1: JP-A-2011-141226

### Disclosure of the Invention

### Problem to be Solved by the Invention

When the portable information terminal is used in a moving state, fading of the received waves occurs along with the radio propagation, and hence the reception performance is often degraded as compared to the case where the radio waves are received in a stationary state. This is because the received waves cause fluctuations due to fading, and thus the accuracy of demodulation is reduced or the reception levels are varied.

Further, as disclosed in Patent Literature 1, the modulated wave of digital broadcasting in Japan is modulated by an orthogonal frequency division multiplexing (OFDM) signal based on a standard called integrated services digital broadcasting-terrestrial (ISDB-T), and there are some problems depending on the modulation system regarding the degradation of the reception performance in the moving state. For example, when reflected waves from distant mountains or buildings are mixed, the permitted guard interval may be exceeded, which adversely affects the required carrier to noise ratio (C/N) to reduce the reception performance.

Digital broadcasting is originally made under a specification assuming an indoor stationary television. Excellent reception performance adapted to the design concept can be obtained in a static environment, but when the digital broadcasting is received by the portable information terminal such as a mobile phone, such performance degradation occurs.

With appropriate adjustment of parameters of a demodulation circuit included in the portable information terminal, the performance degradation in the moving state can be suppressed to some extent. In this case, however, the performance in the stationary state is degraded to some degree. That is, the reception performance in the stationary state and the reception performance in the moving state are in a trade-off relationship, and whether to adjust the parameters to meet the stationary state or to meet the moving state is required to be considered at the time of designing. The parameters are generally adjusted to the middle so that performance of both states can be achieved to some degree. However, this method is inferior as compared to the condition adjusted to be most optimal to meet the stationary state or the moving state.

In Patent Literature 1, it is described that the moving speed is estimated based on the plurality of detection values relating to the received radio waves. However, there is no description of using the estimated speed information for improvement of the reception quality of the receiver, in particular, there is no description of setting a width and a position of an FFT window in accordance with the estimated speed information.

This invention has an object to provide, in a portable information terminal having a digital broadcasting reception function, means for improving reception performance of digital broadcasting in a stationary state and a moving state, and further improving the reception capability during use.

### Means to Solve the Problem

In view of the above-mentioned problem, one aspect of this invention relates to a portable information terminal, which has a function of receiving digital broadcasting, including: estimation means for estimating information on a Doppler frequency based on a received wave; and determination means for, while estimating a moving speed based on the estimated information on the Doppler frequency, determining a parameter of an FFT window in accordance with the estimated moving speed.

Further, another aspect of this invention relates to a demodulation method in a portable information terminal, which has a function of receiving digital broadcasting, the demodulation method including: estimating information on a Doppler frequency based on a received wave; and determining, while estimating a moving speed based on the estimated information on the Doppler frequency, a parameter of an FFT window in accordance with the estimated moving speed.

In addition, another aspect of this invention relates to a control program for a demodulation method in a portable information terminal, which has a function of receiving digital broadcasting, the control program causing a computer to execute: processing of estimating information on a Doppler frequency based on a received wave; and processing of, while estimating a moving speed based on the estimated information on the Doppler frequency, determining a parameter of an FFT window in accordance with the estimated moving speed.

### Effect of the Invention

According to one embodiment of this invention, means for estimating the Doppler frequency or the speed information in the moving state is provided. Thus, it is possible to optimize parameters of a demodulation circuit to values corresponding to the moving speed based on the information, and to maximize the reception performance of the portable information terminal.

### Brief Description of the Drawing

FIG. 1 is a block diagram illustrating a schematic configuration of a portable information terminal according to each embodiment of this invention.
FIG. 2 is an explanatory diagram of reception performance when an OFDM signal is demodulated.
FIG. 3 shows explanatory diagrams of forward protection processing and backward protection processing.
FIG. 4 shows explanatory diagrams of a method of determining a time constant of an FFT window in the portable information terminal according to an embodiment of this invention.

### Modes for Embodying the Invention

Now, the configuration of each embodiment of this invention is described in detail with reference to the drawings. Note that, the technical scope of this invention is not interpreted as to be limited to the embodiments described below.

First, the principle of general demodulation processing of an information terminal is described.

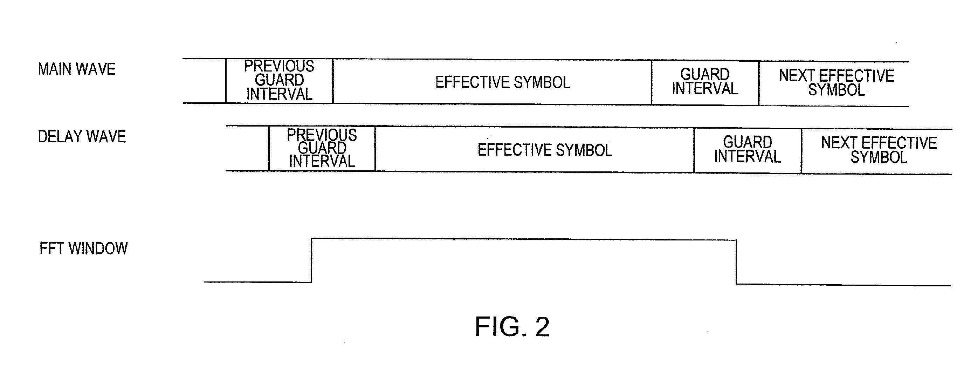

When an OFDM signal is demodulated in the information terminal, received waves are subjected to fast Fourier transform (FFT), and resultant OFDM subcarriers are demodulated. At this time, as illustrated in FIG. 2, a temporal width for subjecting the received waves to FFT (referred to as "FFT window") is predetermined. Assuming that a reflected wave is present with respect to a main wave such as a direct wave, the FFT window has a predetermined certain time width and temporal position with respect to the timing of the received wave. Due to the characteristics of OFDM modulation, problem-free demodulation is possible when the entire effective symbol of a delay wave such as the reflected wave falls within the FFT window. However, when the delay time of the reflected wave is out of the FFT window, a demodulator receives interference energy, which degrades the reception performance thereof.

When radio waves are received in a stationary state, the delay of the reflected wave with respect to the main wave does not significantly vary, and therefore it is basically unnecessary to move the position of the FFT window. Therefore, the FFT window may be caused to slowly follow the main wave. This is because, when the FFT window is set with high mobility, in a case of a minute electric field close to sensitivity or the like, the FFT window may be moved due to noise or the like inside a receiver, which may cause degradation of the sensitivity or the like.

On the other hand, when radio waves are received in a moving state, the reflected waves from various buildings are input along with the movement, and hence the delay of the reflected wave with respect to the main wave significantly varies over time. Therefore, it is preferred that the position of the FFT window be movable faster to increase the following performance.

Meanwhile, in the demodulator, before converting demodulated data into a TS signal, appropriate demodulation is required at a timing of a frame of the OFDM signal of the received wave. This is called OFDM synchronization or the like. At the latter stage of the demodulator, the data obtained after the demodulation is de-interleaved, subjected to processing such as error correction, and reordered in a TS packet format. Also in this case, a circuit has timing according to the TS packet format, and providing this timing is called TS synchronization or the like.

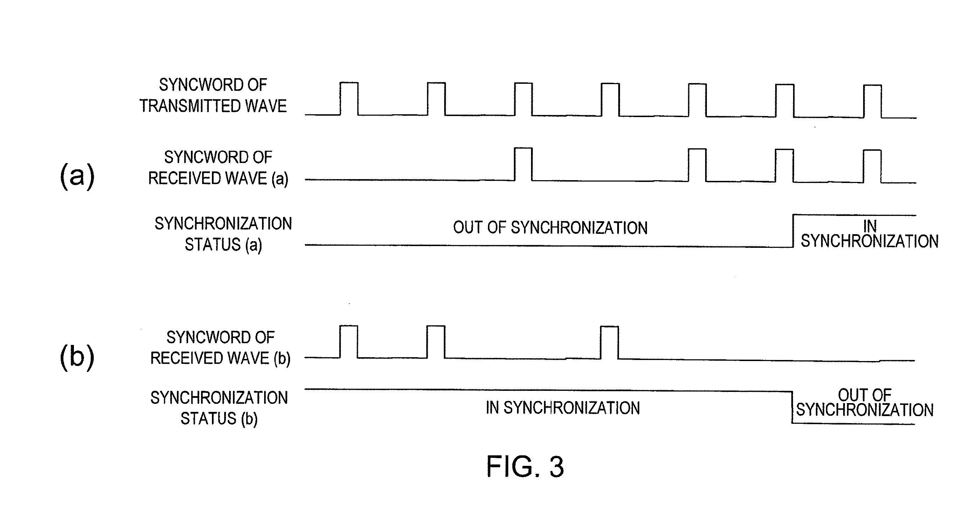

In the OFDM synchronization or the TS synchronization, synchronization is achieved when the received wave is correctly demodulated, but when there are many reception errors, synchronization is lost. In a synchronizing circuit, in cases of synchronization acquisition, which is a process of establishing synchronization from a state in which synchronization is lost, and synchronization loss, which is a process of transferring from a state in which synchronization is achieved to a state in which synchronization is lost, there are performed processing such as determining that the synchronization is established when a synchronization index such as a syncword is continuously detected a predetermined number of times or determining that the synchronization is lost when the synchronization index is continuously missed a predetermined number of times, which are respectively called backward protection and forward protection. FIG. 3(a) illustrates an example of backward synchronization processing, which sets the protection stage count to two. FIG. 3(b) illustrates an example of forward synchronization processing, which similarly sets the protection stage count to two.

The optimum values of the backward and forward protection stage counts also differ depending on the stationary state and the moving state. This is because there is a disadvantage in an asynchronous state that data is not output to the latter stage of the corresponding circuit, and hence the user cannot watch the broadcasting. Even when the received data is temporarily wrong during those protection periods, if the received data is immediately restored, the data is immediately output to the latter stage. However, once the asynchronous state is established, even if the received data is restored, the data is not output to the latter stage in the backward protection period, and hence correct data is discarded.

In the stationary state, the received wave is stable, and hence the backward protection stage count is preferred to be increased to avoid synchronization error due to noise and the like. Further, the forward protection stage count may be decreased so as to perform such an operation as to cancel the synchronization at the slightest deterioration of the received wave quality. With this, it is possible to receive only reliable data, and to improve the received data quality of the latter stage. Further, by decreasing the forward protection stage count, it is possible to shorten a detection time period from the deterioration of the received wave quality until recognition of synchronization loss. Therefore, the unreceivable state can be represented to the user early, and an effect of urging the user to take an action (for example, change a channel) can be expected.

On the other hand, in the moving state, such an unstable state that the reception level exceeds and falls below the sensitivity of the terminal due to fading is conceivable. In such a reception environment, when the unreceivable hour rate increases, the user may regard the receiver to have bad reception sensitivity. In this case, such an operation that enables various synchronizations to be easily achieved and not easily lost is preferred even though this operation may partially reduce the reliability of the received data. That is, the following operation can be achieved. That is, the backward protection stage count is decreased so that the synchronization is immediately established when the received wave is received even a little, and the forward protection stage count is increased so as to prevent the synchronization loss as much as possible once the synchronization is established. However, in order to improve the reception quality, it is more preferred to optimally adjust the following speed of the setting timing of the FFT window in accordance with the moving speed of the information terminal.

A portable information terminal 1 according to each embodiment of this invention is made in view of the characteristics of the above-mentioned demodulation processing, and is made in order to improve the reception performance of the digital broadcasting in the stationary state and the moving state, and further improve the reception capability during use.

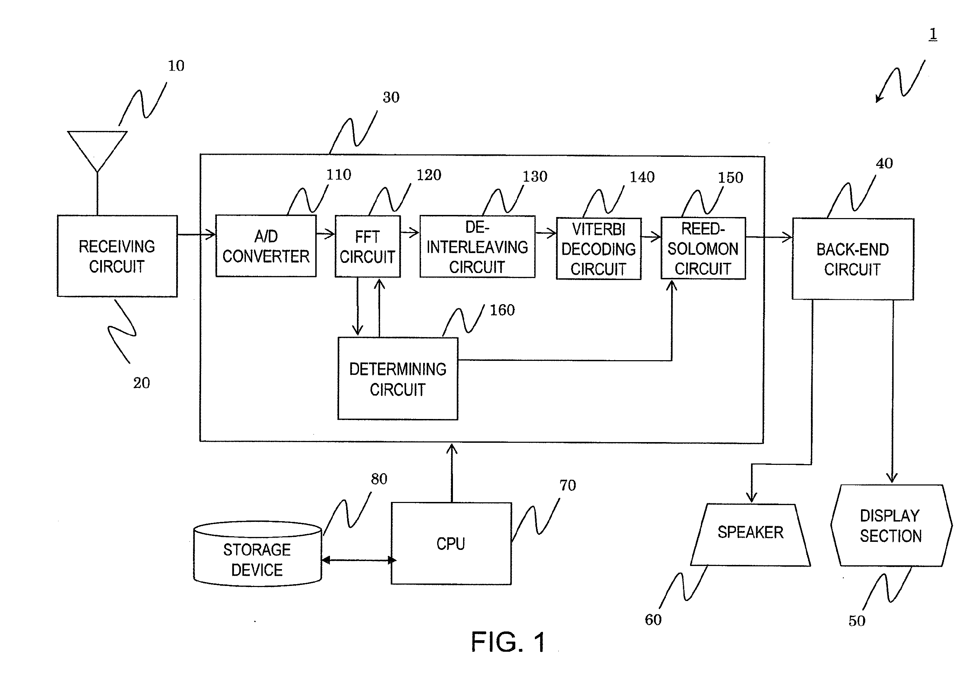

Next, the schematic configuration of the portable information terminal 1 according to a first embodiment of this invention illustrated in FIG. 1 is described.

Referring to FIG. 1, the portable information terminal 1 according to this embodiment includes an antenna 10, a receiving circuit 20, an OFDM demodulation section 30, a back-end circuit 40, a display section 50, a speaker 60, a CPU 70, and a storage device 80. The portable information terminal 1 is an information terminal that has a module for receiving digital broadcasting or the like installed therein, such as a smartphone, a tablet terminal, and a portable game machine.

The antenna 10 captures radio waves in air and converts the radio waves into electric signals. The output of the antenna 10 is received by the receiving circuit 20 for digital broadcasting at the latter stage. Then, the receiving circuit 20 converts the received electric signals into IF signals or the like and outputs the IF signals or the like.

The OFDM demodulation section 30 demodulates, as OFDM signals, the IF signals or the like output from the receiving circuit 20, and outputs transport stream (TS) signals. As illustrated in FIG 1, the OFDM demodulation section 30 includes an A/D converter 110, an FFT circuit 120, a de-interleaving circuit 130, a Viterbi decoding circuit 140, a Reed-Solomon circuit 150, and a determining circuit 160.

First, the A/D converter 110 digitalizes the analog signals such as the IF signals. The following signal processing is all performed in the digital circuit. The FFT circuit 120 subjects the input received waves to FFT processing to demodulate the received waves into subcarriers in synchronization with the timing of the OFDM signal. At this time, the FFT circuit 120 utilizes setting information output from the determining circuit 160, such as setting information on an FFT window and setting of the backward and forward protection stage counts, which is used when achieving OFDM synchronization. The de-interleaving circuit 130 performs processing reverse to reordering of predetermined interleaving to demodulation information on the subcarriers output from the FFT circuit 120 to restore the signal into the original signal. The Viterbi decoding circuit 140 Viterbi-decodes the data output from the de-interleaving circuit 130, subjects the decoded data to error correction, and outputs the resultant data. The Reed-Solomon circuit 150 decodes the Reed-Solomon code, reorders the code into a packet signal called TS, and outputs the resultant signal. The determining circuit 160 reads fading information output from the FFT circuit 120, estimates speed information, and sets a width, a position, or the like of the FFT window to the FFT circuit 120 in accordance with the estimated speed information. Further, the determining circuit 160 sets, regarding the synchronization processing, the setting information on the FFT window, the backward and forward protection stage counts, and the like to the FFT circuit 120 and the Reed-Solomon circuit 150.

The back-end circuit 40 decodes the content of the TS, performs uncompressing processing of compressed video and sound, and reproduces the original data. The display section (LCD) 50 restores the video signal reproduced by the back-end circuit 40 into a user-visible two-dimensional video, and displays the two-dimensional video. Further, the speaker 60 restores the reproduced sound signal into a user-audible acoustic signal, and plays the acoustic signal.

The central processing unit (CPU) 70 performs initialization, other settings, determination of states, and other instructions for respective circuits such as the OFDM demodulation section 30. Further, the central processing unit 70 executes programs and setting information stored in the storage device 80.

Subsequently, a reception operation of the portable information terminal 1 according to the first embodiment of this invention is described.

In the portable information terminal 1 of this embodiment, when the received wave is input to the FFT circuit 120, the FFT circuit 120 calculates the rotation amount of the carrier to detect a frequency offset. Then, the input signal is corrected with this value to cancel the frequency offset. This operation corresponds to so-called automatic frequency control (AFC), and thus the reception of the digital broadcasting can be continued even when the received frequency is slightly shifted.

Based on the information on the above-mentioned frequency offset, a Doppler frequency when multi-path received waves are received can be estimated. The FFT circuit 120 outputs this information to the determining circuit 160. The determining circuit 160 estimates, based on the information on the Doppler frequency input from the FFT circuit 120, the moving speed of the portable information terminal. In the cities or the like, the Doppler frequency can be statically estimated to some extent. That is, the maximum Doppler frequency fd at a certain speed is known to have a relationship of fd=v/λ, where v represents a moving speed and λ represents a wavelength. Therefore, by calculating the maximum Doppler frequency based on an instantaneous value of the Doppler frequency and a variation degree of the instantaneous value, the moving speed v can be estimated. This value is proportional to the Doppler frequency.

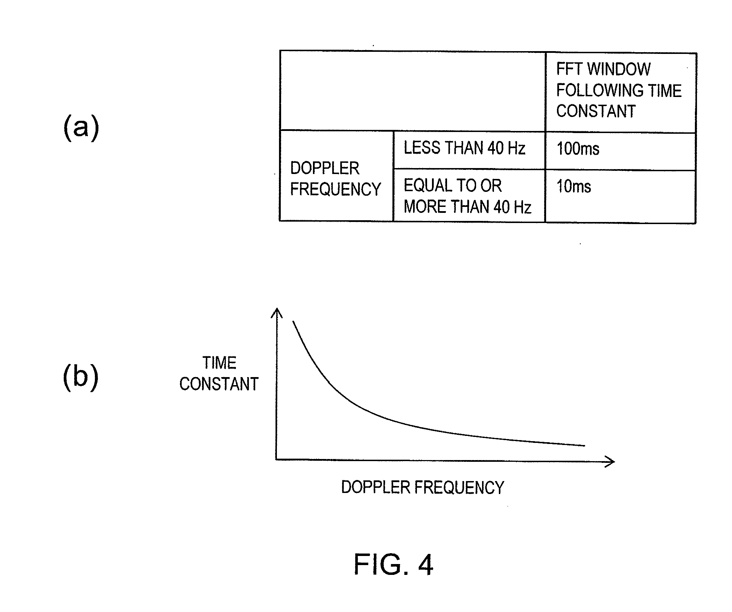

Next, based on the Doppler frequency (or the estimated moving speed), a following time constant of the FFT window, which is set to the FFT circuit 120, is determined. As determination methods, there are methods described below as examples.
(1) A threshold of the Doppler frequency is set in the determining circuit 160, and the magnitude of the moving speed is evaluated based on this value to determine a time constant τ. FIG. 4(a) illustrates an example. FIG. 4(a) illustrates an example of determining the time constant with the Doppler frequency threshold of 40 Hz.
(2) A relationship between the time constant τ and the Doppler frequency fd is defined by a mathematical expression, and by referring to a table or through direct calculation, the time constant τ is calculated based on the maximum Doppler frequency fd. With use of a mathematical expression or a table, a non-linear relationship can be also written. FIG. 4(b) illustrates an example. FIG. 4(b) illustrates an example in which, as the Doppler frequency increases, the time constant reduces, that is, the following performance becomes faster.

With this, the time constant τ of the FFT window is optimally controlled in accordance with the moving speed of the information terminal, and the reception performance of the receiver is fully extracted.

As described above, this invention provides the following effects. The following speed of the setting timing of the FFT window is optimally set in accordance with the moving speed of the information terminal. Therefore, even in the stationary state and the moving state, the FFT demodulation is performed without being affected by the radio wave environment, with the result that the reception quality increases.

Subsequently, a second embodiment of this invention is described. The second embodiment of this invention is a modified example of the above-mentioned first embodiment. In this embodiment, description of parts having functions similar to the parts that have been already described in the first embodiment is omitted.

In the portable information terminal 1 according to this embodiment, when the received waves are input to the FFT circuit 120, the FFT circuit 120 estimates the Doppler frequency when the multi-path received waves are received as described above, and this information is output to the determining circuit 160. Next, the determining circuit 160 estimates the moving speed.

Then, based on the Doppler frequency (or the estimated moving speed), setting values such as the backward and forward protection stage counts, which are set to the FFT circuit 120, the Reed-Solomon circuit 150, and the like, are determined. As the determination methods, processing similar to those of the first example can be applied.

With this, conditions of the backward protection or forward protection for the OFDM synchronization, which is processed inside the FFT circuit 120, and the TS synchronization, which is processed inside the Reed-Solomon circuit, are optimally controlled in accordance with the moving speed of the terminal, and the reception performance of the receiver is fully extracted.

The portable information terminal 1 according to each embodiment of this invention has been described above, but this invention is not limited to this configuration and design changes into various forms are possible. For example, alternate speed information or Doppler frequency can be used for the moving state by obtaining the Doppler frequency not from the digital broadcasting reception tuner of the portable terminal but from outside the portable terminal, such as from the GPS of the portable terminal, devices including an acceleration sensor, base station information of the mobile phone, or in a case of an in-vehicle device, vehicle speed information. Further, the speed information in the moving state can be measured by a measuring apparatus such as an inertial navigation positioning system including a directional sensor and a vehicle speed sensor.

The above-mentioned portable information terminal 1 described in this invention is applicable to various apparatus such as a television and an information terminal that can receive digital terrestrial broadcasting, One Seg broadcasting, and multimedia broadcasting.

This application claims priority from Japanese Patent Application No. 2012-025291, filed on February 8, 2012, the entire disclosure of which is incorporated herein.

## Claims

1. A portable information terminal, which has a function of receiving digital broadcasting, comprising:
estimation means for estimating information on a Doppler frequency based on a received wave; and
determination means for, while estimating a moving speed based on the estimated information on the Doppler frequency, determining a parameter of an FFT window in accordance with the estimated moving speed.

2. A portable information terminal according to claim 1, wherein the determination means determines, based on the estimated Doppler frequency or moving speed, setting information on conditions for forward protection and backward protection, which are used in forward protection processing and backward protection processing for synchronization processing.

3. A portable information terminal according to claim 1 or 2,
wherein the parameter comprises a following time constant, and
wherein the following time constant is determined so as to correspond to a threshold of the Doppler frequency preset in accordance with the estimated moving speed.

4. A portable information terminal according to claim 1 or 2,
wherein the parameter comprises a following time constant, and
wherein the following time constant is calculated with reference to a mathematical expression or table predefined in accordance with the estimated moving speed.

5. A portable information terminal according to claim 1 or 2, wherein the Doppler frequency is estimated by calculating a rotation amount of a carrier in accordance with the received wave and using frequency offset information based on the rotation amount of the carrier.

6. A portable information terminal according to claim 1 or 2, wherein the Doppler frequency is statistically estimated by calculating a maximum Doppler frequency based on an instantaneous value of the Doppler frequency and a variation degree of the instantaneous value.

7. A portable information terminal according to claim 1 or 2, wherein the Doppler frequency is estimated with use of a positioning system.

8. A demodulation method in a portable information terminal, which has a function of receiving digital broadcasting, the demodulation method comprising:
estimating information on a Doppler frequency based on a received wave; and
determining, while estimating a moving speed based on the estimated information on the Doppler frequency, a parameter of an FFT window in accordance with the estimated moving speed.

9. A control program for a demodulation method in a portable information terminal, which has a function of receiving digital broadcasting, the control program causing a computer to execute:
processing of estimating information on a Doppler frequency based on a received wave; and
processing of, while estimating a moving speed based on the estimated information on the Doppler frequency, determining a parameter of an FFT window in accordance with the estimated moving speed.
